# EUROPÄISCHE PATENTANMELDUNG

(11) **EP 2 042 288 A1**
(43) Veröffentlichungstag der Anmeldung: **01.04.2009**
(21) Anmeldenummer: 08016493.2
(22) Anmeldetag: 18.09.2008
(51) Int. Cl.: B29C 44/32, B29C 44/12

(54) **Verbundkörper und Verfahren zu dessen Herstellung**

(30) Priorität: 26.09.2007 DE 102007045900
(71) Anmelder: REHAU AG + Co, 95111 Rehau (DE)
(72) Erfinder: Goldstein, Jörg, 95028 Hof (DE); Hermann, Andreas, 95111 Rehau (DE); Zeeh, Jürgen, 95194 Regnitzlosau (DE)

(57) **Zusammenfassung**

Die Erfindung betrifft ein Verfahren zur Herstellung eines Verbundkörpers, eine Vorrichtung zur Durchführung des Verfahrens sowie einen durch das Verfahren erhältlichen Verbundkörper. Das Verfahren umfasst die Schritte: Bereitstellen eines Hohlkörpers (11), und Einbringen eines aushärtbaren Mediums (12) in den Hohlkörper (11). Um ein herkömmliches Verfahren dahingehend zu verbessern, dass auch komplexe Raumformen mit hoher Maßhaltigkeit darstellbar sind, umfasst das erfindungsgemäße Verfahren zudem die Schritte: Einbringen des Hohlkörpers (11) in eine Formgebungseinrichtung (25), so dass das aushärtbare Medium den Hohlkörper (11) gegen die Formgebungseinrichtung (25) drückt, und Aushärten des aushärtbaren Mediums in der Formgebungseinrichtung (25), während das aushärtbare Medium den Hohlkörper (11) gegen die Formgebungseinrichtung (25) drückt, um die Form des Verbundkörpers (1) zu fixieren.

## Beschreibung

Die Erfindung betrifft ein Verfahren zur Herstellung eines Verbundkörpers, umfassend die Schritte:
- Bereitstellen eines Hohlkörpers und
- Einbringen eines aushärtbaren Mediums in den Hohlkörper.

Ein derartiges Verfahren ist aus der EP 0 899 078 bekannt.

Der Erfindung liegt die Aufgabe zugrunde, das Verfahren gemäß dem Stand der Technik dahingehend weiterzuentwickeln, dass komplexe Raumformen mit hoher Maßhaltigkeit darstellbar sind.

Zur Lösung dieser Aufgabe stellt die Erfindung das Verfahren zur Herstellung eines Verbundkörpers gemäß Anspruch 1 bereit, umfassend die Schritte:
- Bereitstellen eines Hohlkörpers,
- Einbringen eines aushärtbaren Mediums in den Hohlkörper und
- Einbringen des Hohlkörpers in eine Formgebungseinrichtung, so dass das aushärtbare Medium den Hohlkörper gegen die Formgebungseinrichtung drückt,
- Aushärten des aushärtbaren Mediums in der Formgebungseinrichtung, während das aushärtbare Medium den Hohlkörper gegen die Formgebungseinrichtung drückt, um die Form des Verbundkörpers zu fixieren.

Der durch die Formgebungseinrichtung vermittelte Verformungszustand des Hohlkörpers wird quasi "eingefroren", so dass auch komplexe Raumformen darstellbar sind.

Bevorzugte Ausgestaltungen des erfindungsgemäßen Verfahrens werden in den Unteransprüchen beansprucht.

Eine bevorzugte Ausführung der Erfindung betrifft ein Verfahren nach der vorangegangenen Ausführung, wobei das Medium beim Einbringen in den Hohlkörper expandiert und/oder mit Druck beaufschlagt ist. Diese Maßnahme hat den Vorteil, dass ein hoher Druck von der Innenseite des Hohlkörpers erzeugt wird, so dass eine Unterdruckeinrichtung an der Außenseite des Hohlkörpers entbehrlich ist, um den Hohlkörper an der Formgebungseinrichtung in Anlage zu bringen. Dadurch wird das Verfahren erheblich vereinfacht.

Eine weitere bevorzugte Ausführung der Erfindung betrifft ein Verfahren nach einer der vorangegangenen Ausführungen, wobei als aushärtbares Medium ein aushärtbarer Schaum in den Hohlkörper eingebracht wird. Diese Maßnahme hat den Vorteil, dass ein Schaum eine sehr geringe Dichte aufweist, so dass ein resultierender Verbundkörper trotz großen Volumens ein geringes Gewicht aufweisen kann.

Eine weitere bevorzugte Ausführung der Erfindung betrifft ein Verfahren nach einer der vorangegangenen Ausführungen, wobei das Medium in einen Zwischenraum außerhalb eines Einsetzkörpers in den Hohlkörper eingebracht wird. Diese Maßnahme hat den Vorteil, dass der resultierende Verbundkörper eine hohe Knicksteifigkeit aufweist besonders große Kräfte aufnehmen kann.

Eine weitere bevorzugte Ausführung der Erfindung betrifft ein Verfahren nach einer der vorangegangenen Ausführungen, wobei das Medium den Zwischenraum zwischen dem Einsetzkörper und dem Hohlkörper vollständig ausfüllt. Diese Maßnahme hat den Vorteil, dass das Medium mit hohem Druck gegen den Hohlkörper wirkt und zudem den Einsetzkörper isolieren kann.

Eine weitere bevorzugte Ausführung der Erfindung betrifft ein Verfahren nach einer der vorangegangenen Ausführungen, wobei als Hohlkörper ein strangförmiges Hohlprofil bereitgestellt wird. Diese Maßnahme hat den Vorteil, dass derartige Profile leicht und kostengünstig herstellbar sind (z.B. im Wege des Extrusionsverfahrens).

Eine weitere bevorzugte Ausführung der Erfindung betrifft ein Verfahren nach einer der vorangegangenen Ausführungen, wobei der Einsetzkörper als Hohlkörper, vorzugsweise als starrer Hohlkörper ausgebildet ist. Diese Maßnahme hat den Vorteil, dass der resultierende Verbundkörper neben einer statischen Tragfunktion auch eine leitende Funktion, z.B. zum Fluidtransport, übernehmen kann.

Vorzugsweise sind der Einsetzkörper und der den Einsetzkörper umgebende Hohlkörper derart ausgelegt, dass der den Einsetzkörper umgebende Hohlkörper zuerst unter der Einwirkung des mit Druck beaufschlagten und/oder expandierenden Mediums nachgibt und sich verformt.

Eine weitere bevorzugte Ausführung der Erfindung betrifft ein Verfahren nach einer der vorangegangenen Ausführungen, wobei als Hohlkörper und/oder als Einsetzkörper ein strangförmiges Hohlprofil mit einem ovalen oder im Wesentlichen polygonalen Querschnittsprofil bereitgestellt wird. Diese Maßnahme hat den Vorteil, dass das Querschnittsprofil des Hohlkörpers und/oder des Einsetzkörpers den spezifischen Anforderungen entsprechend ausgelegt werden kann, wobei beliebige Querschnittsprofile des Hohlkörpers und des Einsetzkörpers kombiniert werden können. Der Hohlkörper und der Einsetzkörper sind dabei vorzugsweise konzentrisch angeordnet.

Eine weitere bevorzugte Ausführung der Erfindung betrifft ein Verfahren nach einer der vorangegangenen Ausführungen, wobei der Hohlkörper durch Einbringen des Mediums derart verformt wird, dass sich der Umfang des Hohlkörpers um bis zu 100 %, vorzugsweise zwischen 20 und 80 %, bevorzugt zwischen 40 und 60 % und besonders bevorzugt um 50 % vergrößert. Diese Maßnahme hat den Vorteil, dass Raumformen des Verbundkörpers mit besonders großen Umformgraden darstellbar sind.

Eine weitere bevorzugte Ausführung der Erfindung betrifft ein Verfahren nach einer der vorangegangenen Ausführungen, wobei die Formgebungseinrichtung eine geschlossene Form aufweist. Diese Maßnahme hat den Vorteil, dass auch besonders komplexe Raumformen des Verbundkörpers (z.B. Hinterschnitte, etc.) darstellbar sind.

Eine weitere bevorzugte Ausführung der Erfindung betrifft ein Verfahren nach einer der vorangegangenen Ausführungen, wobei als Hohlkörper und/oder als Einsetzkörper ein Extrusionsprofil bereitgestellt wird. Diese Maßnahme hat den Vorteil, dass der Verbundkörper im kontinuierlichen Verfahren herstellbar ist.

Eine weitere bevorzugte Ausführung der Erfindung betrifft einen Verbundkörper, erhältlich durch das Verfahren nach einer der vorangegangenen Ausführungen, wobei der Hohlkörper und/oder der Einsetzkörper im Wesentlichen aus Kunststoff, vorzugsweise Polymer, bevorzugt Polyethylen oder PVC besteht.

Diese Maßnahme hat den Vorteil, dass diese Materialien für das erfindungsgemäße Verfahren und für die bestimmungsgemäße Verwendung des Verbundkörpers besonders gute und nützliche Materialeigenschaften aufweisen.

Eine weitere bevorzugte Ausführung der Erfindung betrifft einen Verbundkörper nach der vorangegangenen Ausführung, wobei der Hohlkörper und/oder der Einsetzkörper eine Wandstärke zwischen 0,2 mm und 8 mm, vorzugsweise zwischen 0,5 mm und 4 mm, bevorzugt zwischen 1 mm und 3 mm, besonders bevorzugt 2 mm aufweist. Diese Maßnahme hat den Vorteil, dass bei derartigen Wandstärken ideale Verhältnisse zwischen Formbarkeit des Materials einerseits und Materialgewicht andererseits vorliegen.

Eine weitere bevorzugte Ausführung der Erfindung betrifft einen Verbundkörper nach einer der vorangegangenen Ausführungen, wobei das Medium, der Hohlkörper und/oder der Einsetzkörper chemisch ähnliche, vorzugsweise identische Komponenten aufweisen. Diese Maßnahme hat den Vorteil, dass das Medium, der Hohlkörper und/oder der Einsetzkörper einfacher und besser zu dem erfindungsgemäßen Verbundkörper zusammengefügt werden können.

Eine weitere bevorzugte Ausführung der Erfindung betrifft einen Verbundkörper nach einer der vorangegangenen Ausführungen, wobei das Medium, der Hohlkörper und/oder der Einsetzkörper stoffschlüssig aneinander haften. Diese Maßnahme hat den Vorteil, dass das Medium, der Hohlkörper und/oder der Einsetzkörper besonders fest verbunden sind.

Eine weitere bevorzugte Ausführung der Erfindung betrifft einen Verbundkörper nach einer der vorangegangenen Ausführungen, wobei der Verbundkörper zumindest abschnittsweise ein ovales und/oder im Wesentlichen polygonales Querschnittsprofil aufweist. Diese Maßnahme hat den Vorteil, dass der Verbundkörper vielseitiger verwendbar und einsetzbar ist.

Eine weitere bevorzugte Ausführung der Erfindung betrifft einen Verbundkörper nach einer der vorangegangenen Ausführungen, wobei der Verbundkörper in Längsrichtung unterschiedliche Querschnittsprofile aufweist, die sich vorzugsweise in einem bestimmten Muster wiederholen. Diese Maßnahme hat den Vorteil, dass der Verbundkörper verschiedene Bereiche umfasst, die funktional unterschiedlich ausgelegt werden können.

Eine weitere bevorzugte Ausführung der Erfindung betrifft einen Verbundkörper nach einer der vorangegangenen Ausführungen, wobei das Medium eine Dichte von 0,05 g/cm³ bis 0,5 g/cm³, vorzugsweise 0,1 g/cm³ bis 0,4 g/cm³, bevorzugt von 0,2 g/cm³ bis 0,3 g/cm³, und besonders bevorzugt 0,25 g/cm³ aufweist. Diese Maßnahme hat den Vorteil, dass der Verbundkörper trotz eines geringen Gewichts eine hohe Steifigkeit aufweist und somit auch bei Leichtbauanwendungen zum Einsatz gebracht werden kann.

Eine weitere bevorzugte Ausführung der Erfindung betrifft einen Verbundkörper nach einer der vorangegangenen Ausführungen, wobei das aushärtbare Medium Kunststoff, vorzugsweise Polymer, bevorzugt Polyethylen oder PVC enthält. Diese Maßnahme hat den Vorteil, dass derartige Materialien kostengünstig verfügbar sind.

Eine weitere bevorzugte Ausführung der Erfindung betrifft einen Verbundkörper nach einer der vorangegangenen Ausführungen, wobei das aushärtbare Medium Zusatzstoffe, vorzugsweise Treibmittelzusatz und/oder Weichmacher enthält. Diese Maßnahme hat den Vorteil, dass gewünschte Eigenschaften des Mediums bzw. des Verbundkörpers über die Auswahl und Dosierung der Zusatzstoffe des Mediums gezielt einstellbar sind.

Eine weitere bevorzugte Ausführung der Erfindung betrifft einen Verbundkörper nach einer der vorangegangenen Ausführungen, wobei das aushärtbare Medium im ausgehärteten Zustand elastisch ist. Diese Maßnahme hat den Vorteil, dass der Verbundkörper trotz geringen Gewichts eine hohe Flexibilität und Knicksteifigkeit aufweisen kann und demnach vielseitiger anwendbar und einsetzbar ist.

Eine weitere bevorzugte Ausführung der Erfindung betrifft eine Vorrichtung zur Durchführung des Verfahrens nach einer der vorangegangenen Ausführungen.

Eine weitere bevorzugte Ausführung der Erfindung betrifft eine Vorrichtung nach der vorangegangenen Ausführung, wobei die Formgebungseinrichtung eine gegenüber der Raumform des Hohlkörpers unterschiedliche Form vermittelt. Diese Maßnahme hat den Vorteil, dass der Verbundkörper mit besonders hoher Maßhaltigkeit herstellbar ist.

Eine weitere bevorzugte Ausführung der Erfindung betrifft eine Vorrichtung nach einer der vorangegangenen Ausführungen, wobei die Formgebungseinrichtung verstellbar ist, um dem Hohlkörper unterschiedliche Formen zu vermitteln. Diese Maßnahme hat den Vorteil, dass zur Herstellung von Verbundkörpern mit unterschiedlichen Raumformen dieselbe Formgebungseinrichtung verwendet werden kann.

### Kurze Beschreibung der beiliegenden Zeichnungen:

- Figuren 1 a bis 1 d: zeigen Varianten eines geschäumten Verbundkörpers mit unterschiedlichen Querschnittsprofilen gemäß einem ersten Ausführungsbeispiel der Erfindung.
- Figuren 2a bis 2c: zeigen Varianten eines geschäumten Verbundkörpers gemäß einem zweiten Ausführungsbeispiel der vorliegenden Erfindung, wobei der Verbundkörper in Längsrichtung unterschiedliche Querschnittsprofile aufweist.
- Figuren 3a bis 3d: zeigen Varianten eines geschäumten Verbundkörpers mit unterschiedlichen Querschnittsprofilen gemäß einem dritten Ausführungsbeispiel der Erfindung, wobei der Verbundkörper jeweils einen Einsetzkörper aufweist.
- Figuren 4a bis 4d: zeigen verschiedene Varianten und Ansichten eines geschäumten Verbundkörpers gemäß einem vierten Ausführungsbeispiel der Erfindung, wobei die Verbundkörper jeweils einen Einsetzkörper und in Längsrichtung unterschiedliche Querschnittsprofile aufweisen.
- Figur 5: zeigt schematisch eine Vorrichtung zur Durchführung des erfindungsgemäßen Verfahrens.

### Detaillierte Beschreibung der bevorzugten Ausführungsbeispiele:

Die Erfindung betrifft ein Verfahren zur Herstellung eines geschäumten Verbundkörpers 1, umfassend die Schritte:

Bereitstellen eines Hohlkörpers 11, Einbringen eines aushärtbaren Mediums in den Hohlkörper 11, Einbringen des Hohlkörpers 11 in eine Formgebungseinrichtung 25, so dass das aushärtbare Medium den Hohlkörper 11 gegen die Formgebungseinrichtung 25 drückt, und Aushärten des aushärtbaren Mediums in der Formgebungseinrichtung 25, während das aushärtbare Medium den Hohlkörper 11 gegen die Formgebungseinrichtung 25 drückt, um die Form des Verbundkörpers 1 zu fixieren.

Das erfindungsgemäße Verfahren kann diskontinuierlich bzw. stationär oder kontinuierlich abgewickelt werden.

Das kontinuierliche Verfahren wird nach dem Prinzip des Koextrusionsverfahrens abgewickelt. Der Begriff "Hohlkörper 11" ist im Hinblick auf das kontinuierliche Verfahren eher als "Hohlkörperabschnitt 11" zu verstehen, so dass das kontinuierliche Verfahren entsprechend die folgenden Schritte umfasst:

Bereitstellen eines Hohlkörperabschnitts 11, Einbringen eines aushärtbaren Mediums in den Hohlkörperabschnitt 11, Einbringen des Hohlkörperabschnitts 11 in eine Formgebungseinrichtung 25, so dass das aushärtbare Medium den Hohlkörperabschnitt 11 gegen die Formgebungseinrichtung 25 drückt, und Aushärten des aushärtbaren Mediums in der Formgebungseinrichtung 25, während das aushärtbare Medium den Hohlkörperabschnitt 11 gegen die Formgebungseinrichtung 25 drückt, um die Form des Verbundkörpers 1 zu fixieren.

Der besseren Verständlichkeit halber wird der Begriff "Hohlkörper 11" jedoch sowohl für das diskontinuierliche bzw. stationäre Verfahren als auch für das kontinuierliche Verfahren angewandt.

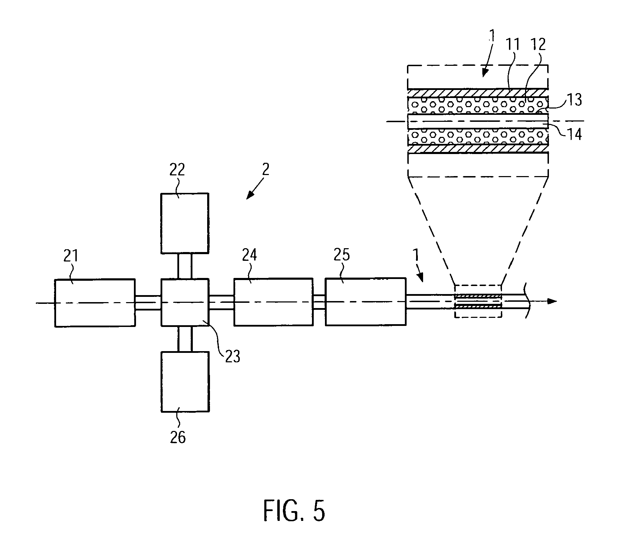

Das kontinuierliche Verfahren wird anhand der zur Durchführung des Verfahrens vorgesehenen Vorrichtung 2 mit Bezug auf Figur 5 beschrieben.

Die Vorrichtung 2 umfasst eine Bereitstellungseinrichtung (Extruder) 21 für den Hohlkörper 11, eine Bereitstellungseinrichtung (Extruder) 22 für das aushärtbare Medium, eine Zusammenführungseinrichtung (Koextrusionseinrichtung) 23, die an die Ausgänge der zwei Bereitstellungseinrichtungen (Extruder) 21 und 22 angeschlossen ist, eine Grundformgebungseinrichtung (Extrusionskopf) 24 und eine Formgebungseinrichtung (Kalibrierungseinrichtung) 25, aus welcher der nach dem erfindungsgemäßen Verfahren gefertigte, ausgeschäumte Verbundkörper 1 austritt.

Bei Bedarf kann zusätzlich eine Bereitstellungseinrichtung (Extruder) 26 an die Zusammenführungseinrichtung (Koextrusionseinrichtung) 23 angeschlossen werden, um den Einsetzkörper 13 bereitzustellen. Der Einsetzkörper 13 und die zugehörige Bereitstellungseinrichtung (Extruder) 26 können allerdings auch weggelassen werden. Für die Zwecke der Erfindungsbeschreibung wird das Verfahren zur Herstellung des Verbundkörpers 1 mit einem Hohlkörper 11 als auch mit einem Einsetzkörper 13 beschrieben.

Im erfindungsgemäßen Verfahren werden der Hohlkörper 11 und der Einsetzkörper 13 als strangförmige extrudierte Hohlprofile mit kreisförmigen, ovalen oder im Wesentlichen polygonalen Querschnittsformen bereitgestellt, und der zwischen dem Hohlkörper 11 und dem Einsetzkörper 13 ausgebildete Zwischenraum 12 wird mit einem aushärtbaren Schaum befüllt. Durch Einleiten des Schaums wird der Hohlkörper 11 derart verformt, dass sich der Umfang des Hohlkörpers 11 um bis zu 100%, vorzugsweise zwischen 20 und 80%, bevorzugt zwischen 40 und 60% und besonders bevorzugt um 50% vergrößert. Der Schaum expandiert derart, dass er den Hohlkörper 11 von Innen gegen die Formgebungseinrichtung (Kalibrierungseinrichtung) 25 drückt, um dem Hohlkörper 11 eine vorgegebene Form zu vermitteln. Der Schaum füllt den Zwischenraum 12 sowohl im noch nicht ausgehärteten Zustand, als auch im ausgehärteten Zustand vollständig aus.

Die Schritte des Bereitstellens des Hohlkörpers 11, des Bereitstellens des Einsetzkörpers 13 und des Einbringens des aushärtbaren Schaums in den zwischen Hohlkörper 11 und Einsetzkörper 13 ausgebildeten Zwischenraum 12 beruhen auf der Grundlage eines herkömmlichen Extrusionsverfahrens und werden daher nicht näher erläutert.

Hinter der Zusammenführungseinrichtung (Koextrusionseinrichtung) 23 ist eine Grundformgebungseinrichtung (Extrusionskopf) 24 angeordnet, die dem extrudierten Hohlprofil des Hohlkörpers 11 eine Grundform vermittelt. Beim Austritt aus der Grundformgebungseinrichtung (Extrusionskopf) 24 ist der Schaum noch nicht erstarrt und das Hohlprofil des Hohlkörpers 11 ist demnach weiterhin formbar. Hinter der Grundformgebungseinrichtung (Extrusionskopf) 24 ist die Formgebungseinrichtung (Kalibrierungseinrichtung) 25 angeordnet, wobei Formgebungselemente (Kalibrierungselemente) eine von der Querschnittsform des Hohlkörpers 11 hinter dem Extrusionskopf 24 abweichende Querschnittsform definieren.

Nach dem Austritt aus der Formgebungseinrichtung (Kalibrierungseinrichtung) 25 weist der Verbundkörper 1 einen Aufbau auf, wie in der vergrößerten Querschnittsansicht gemäß Fig. 5 dargestellt ist. In der Formgebungseinrichtung (Kalibrierungseinrichtung) 25 wird der im Hohlraum 12 befindliche, aushärtbare Schaum abgekühlt, so dass sich die Matrix des Schaums verfestigt und fester wird als die Expansionsenergie der im Schaum enthaltenen Gasbläschen, bis die Matrix so fest ist, dass das Gas gefangen ist und sich die Struktur des Schaums nicht mehr ändert. Dieser Zustand wird bei der sogenannten Glastemperatur erreicht.

Im stationären Verfahren wird ein vorzugsweise geschlossener, mit dem aushärtbaren Schaum gefüllter Hohlkörper 11 zumindest abschnittsweise in eine Formgebungseinrichtung 25 eingegeben, so dass der Schaum als aushärtbares Medium den Hohlkörper 11 gegen die Formgebungseinrichtung 25 drückt. Anschließend wird der Schaum in der Formgebungseinrichtung 25 ausgehärtet, während der Schaum den Hohlkörper 11 gegen die Formgebungseinrichtung 25 drückt, um die Form des Verbundkörpers 1 zu fixieren.

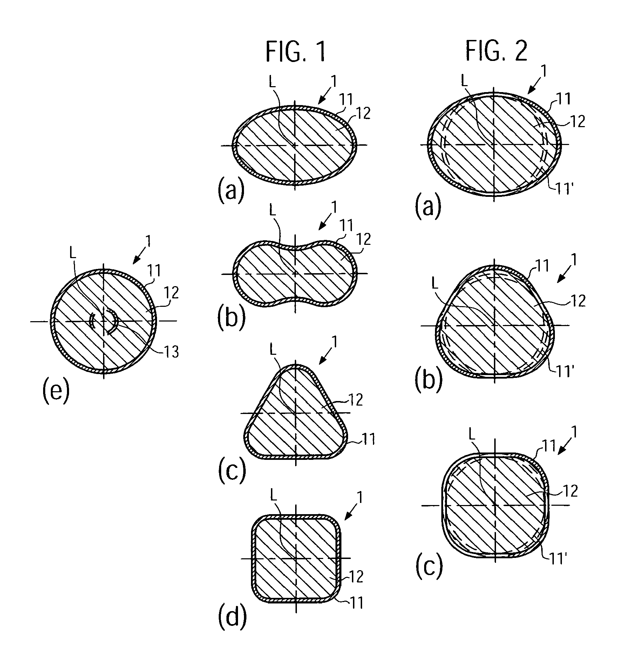

Der durch das erfindungsgemäße, vorangehend beschriebene Verfahren erhältliche, geschäumte Verbundkörper 1 wird nachstehend mit Bezug auf die Figuren 1 bis 4 erläutert.

Der geschäumte Verbundkörper 1 umfasst den Hohlkörper 11 und vorzugsweise den Einsetzkörper 13, wobei der Hohlkörper 11 und/oder der Einsetzkörper 13 im Wesentlichen aus Kunststoff, vorzugsweise Polymer, bevorzugt Polyethylen oder Polyvinylchlorid (PVC) bestehen. Der Hohlkörper 11 und/oder der Einsetzkörper 13 weisen eine Wandstärke zwischen 0,2 mm und 8 mm, vorzugsweise zwischen 0,5 mm und 4 mm, bevorzugt zwischen 1 mm und 3 mm, und besonders bevorzugt eine Wandstärke von 2 mm auf. Insbesondere ist die Wandstärke des Hohlkörpers 11 so dünn, dass die Außenwand des Hohlkörpers 11 durch den in den Hohlraum 12 eingebrachten Schaum verformt wird, während der Einsetzkörper 13 dem Druck des Schaums nicht nachgibt. Der Schaum, der Hohlkörper 11 und/oder der Einsetzkörper 13 weisen derartige chemische Zusammensetzungen auf, so dass der Schaum stoffschlüssig an dem Hohlkörper 11 und/oder dem Einsetzkörper 13 haftet. Vorzugsweise weisen der Schaum, der Hohlkörper 11 und/oder der Einsetzkörper 13 dazu chemisch identische Bestandteile bzw. Komponenten auf. Der Schaum weist eine Dichte von 0,05 bis 0,5 g/cm³, vorzugsweise zwischen 0,1 bis 0,4 g/cm³, bevorzugt zwischen 0,2 und 0,3 g/cm³ und besonders bevorzugt eine Dichte von 0,25 g/cm³ auf, und enthält Kunststoff, vorzugsweise ein Polymer, bevorzugt Polyethylen oder PVC, vorzugsweise mit Zusatzstoffen wie beispielsweise einen Treibmittelzusatz und/oder einen Weichmacher, um dem Schaum im ausgehärteten Zustand elastische Eigenschaft zu verleihen.

Der erfindungsgemäße geschäumte Verbundkörper 1 ist für folgende Anwendungen vorgesehen: Füllprofile, Isolationsprofile, Profile für den Gartenbereich, z. B. Gartenmöbel und Gartenbedarf, Industrieprofile wie Stäbe und Zierprofile und für Sockelblenden. Der geschäumte Verbundkörper 1 ohne Einsetzkörper 13 hat keine leitende Funktion, sondern ausschließlich eine Stützfunktion. Der geschäumte Verbundkörper 1 mit Einsetzkörper 13 kann auch eine leitende Position aufweisen.

Bevorzugte Varianten des erfindungsgemäßen geschäumten Verbundkörpers 1 werden nachstehend mit Bezug auf die Figuren 1 bis 4 beschrieben.

Figuren 1a bis 1e zeigen bevorzugte Varianten des geschäumten Verbundkörpers 1 gemäß dem ersten Ausführungsbeispiel der Erfindung. Gemäß Figur 1 a weist der Verbundkörper 1 ein ovales Querschnittsprofil auf. Gemäß Figur 1b weist der Verbundkörper 1 im Wesentlichen ein sanduhrförmiges Querschnittsprofil auf. Gemäß Figur 1c weist der Verbundkörper 1 im Wesentlichen ein polygonales bzw. dreieckförmiges Querschnittsprofil mit abgerundeten Ecken auf. Gemäß Figur 1d weist der Verbundkörper 1 ein im Wesentlichen quadratisches Querschnittsprofil mit abgerundeten Ecken auf. Der Verbundkörper 1 umfasst den Hohlkörper 11, und der vom Hohlkörper 11 umgebene Hohlraum 12 ist vollständig mit dem Schaum ausgefüllt.

Das Querschnittsprofil des Verbundkörpers 1 in Figur 1e ist kreisförmig, wobei der Einsetzkörper 13 konzentrisch zum Hohlkörper 11 durch einen unterbrochenen Kreis angedeutet ist, um anzuzeigen, dass der Verbundkörper 1 zusätzlich einen Einsetzkörper 13 aufweisen kann, je nach dem, ob dem Verbundkörper 1 eine leitende Funktion beigemessen werden soll oder ausschließlich eine Stützfunktion.

Figuren 2a bis 2c zeigen Varianten des erfindungsgemäßen Verbundkörpers 1 gemäß dem zweiten Ausführungsbeispiel der Erfindung, wobei der Verbundkörper 1 in Längsrichtung bzw. entlang der Längsachse L unterschiedliche Querschnittsformen aufweist, die sich vorzugsweise in einem vorgegebenen Muster wiederholen. Gemäß Figur 2a weist der Verbundkörper in Längsrichtung zumindest abschnittsweise ein im Wesentlichen kreisförmig Querschnittsprofil 11' und ein im Wesentlichen ovales Querschnittsprofil 11 auf. Die Bezugszeichen 11 und 11' zeigen jeweils die (Außen-) Kontur des Hohlkörpers 11 an. Gemäß Figur 2b weist der Verbundkörper entlang der Längsrichtung L zumindest abschnittsweise ein im Wesentlichen kreisförmiges Querschnittsprofil und zumindest abschnittsweise ein im Wesentlichen polygonales bzw. dreieckiges Querschnittsprofil mit abgerundeten Ecken auf. Gemäß Figur 2c weist der Verbundkörper 1 entlang der Längsachse L zumindest abschnittsweise ein im Wesentlichen kreisförmiges Querschnittsprofil und ein im Wesentlichen polygonales bzw. quadratisches Querschnittsprofil mit abgerundeten Ecken auf.

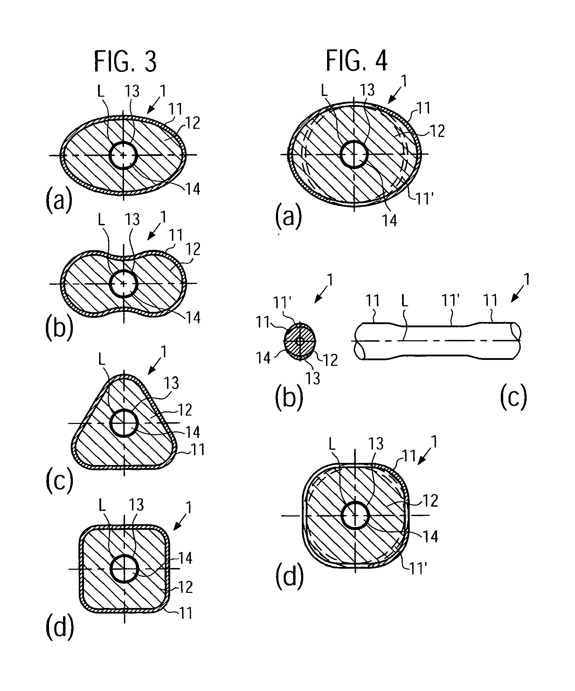

Figuren 3a bis 3d zeigen Varianten des erfindungsgemäßen Verbundkörpers 1 gemäß einem dritten Ausführungsbeispiel der vorliegenden Erfindung, wobei der Verbundkörper 1 den Hohlkörper 11 und den Einsetzkörper 13 aufweist, und wobei der Zwischenraum 12 zwischen dem Hohlkörper 11 und dem Einsetzkörper 13 vollständig mit dem ausgehärteten Schaum ausgefüllt ist. Der Einsetzkörper 13 ist selbst als Hohlkörper ausgebildet und umgibt einen Hohlraum 14. Der Hohlkörper 11 und der Einsetzkörper 13 sind hierbei längliche Extrusionsprofile mit konstanter Querschnittsform. Die Varianten gemäß den Figuren 3a bis 3d entsprechen im Wesentlichen den Varianten gemäß den Figuren 1a bis 1d, wobei der Einsetzkörper 13 jeweils konzentrisch zur Längsachse des Hohlkörpers 11 angeordnet ist. Der Einsetzkörper 13 weist in den Varianten gemäß den Figuren 3a bis 3d jeweils ein kreisförmiges Querschnittsprofil auf.

Die Figuren 4a bis 4d zeigen Varianten des erfindungsgemäßen Hohlkörpers 1 gemäß einem vierten Ausführungsbeispiel der vorliegenden Erfindung, wobei der Verbundkörper 1 bzw. der Hohlkörper 11 entlang seiner Längsachse L unterschiedliche Querschnittsprofile aufweist und wobei der Einsetzkörper 13 konzentrisch zur Längsachse L angeordnet ist. Die Varianten gemäß den Figuren 4a und 4d entsprechen im Wesentlichen den Varianten gemäß den Figuren 2a und 2c. Die Figuren 4b und 4c zeigen eine Schnittansicht bzw. die zugehörige Seitenansicht des Verbundkörpers 1 gemäß dem vierten Ausführungsbeispiel der Erfindung zur Erläuterung des Aufbaus des Verbundkörpers 1 mit in Längsrichtung L unterschiedlichen Querschnittsprofilen.

Die Varianten gemäß den zweiten und vierten Ausführungsbeispielen der vorliegenden Erfindung mit entlang der Längsachse L unterschiedlichen Querschnittsprofilen werden vorzugsweise in einem diskontinuierlichen Verfahren hergestellt. Dabei wird ein Hohlkörper 11 mit vorgegebenen Länge bereitgestellt und in einem Zustand, in welchem der im Hohlraum 12 befindliche Schaum noch nicht ausgehärtet ist, in eine stationäre Formgebungseinrichtung eingelegt, wobei der Schaum expandiert und den Hohlkörper 11 gegen die Formgebungseinrichtung drückt, und wobei der Schaum ausgehärtet wird, um die von der Formgebungseinrichtung vermittelte Form des Verbundkörpers 11 zu fixieren. Im stationären Verfahren sind auch komplexe Raumformen sowie Hinterschnitte oder dgl. darstellbar.

Das erfindungsgemäße Verfahren hat die folgenden Vorteile:

Lediglich ein Grundwerkzeug ist erforderlich, um verschiedene ausgeschäumte Verbundkörper 1 mit unterschiedlichen Endraumformen herzustellen. Durch das erfindungsgemäße Verfahren sind von innen ausgeschäumte Verbundkörper 1 mit intermittierenden Profilquerschnitten darstellbar. Durch die Reduzierung der notwendigen Grundwerkzeuge zur Erzeugung verschiedener Endprodukte können die Vorrichtungskosten bzw. Herstellungskosten eingespart werden.

## Patentansprüche

1. Verfahren zur Herstellung eines Verbundkörpers (1), umfassend die Schritte:
- Bereitstellen eines Hohlkörpers (11),
- Einbringen eines aushärtbaren Mediums in den Hohlkörper (11), **gekennzeichnet durch**
- Einbringen des Hohlkörpers (11) in eine Formgebungseinrichtung (25), so dass das aushärtbare Medium den Hohlkörper (11) gegen die Formgebungseinrichtung (25) drückt und
- Aushärten des aushärtbaren Mediums in der Formgebungseinrichtung (25), während das aushärtbare Medium den Hohlkörper (11) gegen die Formgebungseinrichtung (25) drückt, um die Form des Verbundkörpers (1) zu fixieren.

2. Verfahren nach Anspruch 1, wobei das Medium beim Einbringen in den Hohlkörper (11) expandiert und/oder mit Druck beaufschlagt ist.

3. Verbundkörper (1), erhältlich durch das Verfahren nach einem der vorangegangenen Ansprüche, wobei der Hohlkörper (11) und/oder der Einsetzkörper (13) im Wesentlichen aus Kunststoff, vorzugsweise Polymer, bevorzugt Polyethylen oder PVC, besteht.

4. Verbundkörper (1) nach Anspruch 3, wobei der Hohlkörper (11) und/oder der Einsetzkörper (13) eine Wandstärke zwischen 0,2 mm und 8 mm, vorzugsweise zwischen 0,5 mm und 4 mm, bevorzugt zwischen 1 mm und 3 mm, besonders bevorzugt 2 mm aufweist.

5. Verbundkörper (1) nach Anspruch 3 oder 4, wobei das Medium, der Hohlkörper (11) und/oder der Einsetzkörper (13) chemisch ähnliche, vorzugsweise identische Komponenten aufweisen.

6. Verbundkörper (1) nach einem der Ansprüche 3 - 5, wobei das Medium, der Hohlkörper (11) und/oder der Einsetzkörper (13) stoffschlüssig aneinander haften.

7. Verbundkörper (1) nach einem der Ansprüche 3 - 6, wobei der Verbundkörper (1) zumindest abschnittsweise ein ovales oder im Wesentlichen polygonales Querschnittsprofil aufweist.

8. Verbundkörper (1) nach einem der Ansprüche 3 - 7, wobei der Verbundkörper (1) in Längsrichtung unterschiedliche Querschnittsprofile aufweist, die sich vorzugsweise in einem bestimmten Muster wiederholen.

9. Verbundkörper (1) nach einem der Ansprüche 3 - 8, wobei das Medium eine Dichte von 0,05 g/cm³ bis 0,5 g/cm³, vorzugsweise 0,1 g/cm³ bis 0,4 g/cm³, bevorzugt von 0,2 g/cm³ bis 0,3 g/cm³, und besonders bevorzugt 0,25 g/cm³ aufweist.

10. Verbundkörper (1) nach einem der Ansprüche 3 - 9, wobei das Medium Kunststoff, vorzugsweise Polymer, bevorzugt Polyethylen oder PVC enthält.

11. Verbundkörper (1) nach einem der Ansprüche 3 - 10, wobei das Medium Zusatzstoffe, vorzugsweise Treibmittelzusatz und/oder Weichmacher enthält.

12. Verbundkörper (1) nach einem der Ansprüche 3 - 11, wobei das Medium im ausgehärteten Zustand elastisch ist.

13. Vorrichtung zur Durchführung des Verfahrens nach einem der Ansprüche 1 oder 2.

14. Vorrichtung nach Anspruch 13, wobei die Formgebungseinrichtung (25) eine gegenüber der Raumform des Hohlkörpers (11) unterschiedliche Form vermittelt.

15. Vorrichtung (2) nach einem der Ansprüche 13 oder 14, wobei die Formgebungseinrichtung (25) verstellbar ist, um dem Hohlkörper (11) unterschiedliche Formen zu vermitteln.
